# EUROPÄISCHE PATENTSCHRIFT

(11) **EP 2 966 632 B1**
(45) Veröffentlichungstag und Bekanntmachung des Hinweises auf die Patenterteilung: **15.03.2017**
(21) Anmeldenummer: 15178302.4
(22) Anmeldetag: 13.01.2014
(51) Int. Cl.: G08G 1/16

(54) **VERFAHREN UND VORRICHTUNG ZUR VERMEIDUNG ODER VERRINGERUNG VON KOLLISIONSSCHÄDEN AN EINEM GEPARKTEN FAHRZEUG**
METHOD AND DEVICE FOR PREVENTING OR REDUCING COLLISION DAMAGE TO A PARKED VEHICLE
PROCEDE ET DISPOSITIF PERMETTANT D'EVITER OU DE REDUIRE DES DOMMAGES DUS A UNE COLLISION SUR UN VEHICULE STATIONNE

(30) Priorität: 15.01.2013 DE 102013200491
(43) Veröffentlichungstag der Anmeldung: 13.01.2016
(62) Teilanmeldung aus: 14150895.2
(73) Patentinhaber: Ford Global Technologies, LLC, Dearborn, MI 48126 (US)
(72) Erfinder: Stefan, Frederic, 52072 Aachen (DE); Gussen, Uwe, 52393 Hürtgenwald (DE); Arndt, Christoph, Dr., 57583 Mörlen (DE); Wegner, Goetz-Philipp, 44227 Dortmund (DE)
(74) Vertreter: Dörfler, Thomas

(56) Entgegenhaltungen:
- DE-A1-102004 037 733
- DE-A1-102007 021 405
- DE-A1-102009 032 444
- DE-A1-102010 001 264
- US-A1- 2012 286 974

## Beschreibung

Die Erfindung betrifft ein Verfahren und eine Vorrichtung zur Vermeidung oder Verhinderung von Kollisionsschäden an einem geparkten Fahrzeug aufgrund eines einen Parkvorgang ausführenden Fahrzeuges.

Das Parken von Fahrzeugen kann aus unterschiedlichen Gründen zu Schäden an bereits geparkten Fahrzeugen führen, was mit Stressbelastungen sowie zusätzlichen Kosten für Fahrzeuginhaber sowie Versicherungen verbunden ist.

Aus DE 10 2009 057647 A1 sind ein Verfahren und eine Vorrichtung zum Betreiben eines Kraftfahrzeugs und ein System zum Arrangieren von Standpositionen zumindest zweier Kraftfahrzeuge bekannt. Dabei weist eines der Kraftfahrzeuge eine Schnittstelle auf, die zur Kommunikation mit einem weiteren Kraftfahrzeug ausgebildet ist, welches über eine entsprechende weitere Schnittstelle verfügt. Ferner ist in dem jeweiligen Kraftfahrzeug eine Einheit zum autonomen Rangieren des Kraftfahrzeuges vorgesehen. Hierbei kann insbesondere mittels Kommunikation zwischen einem einparkwilligen Fahrzeug und einem parkenden Fahrzeug gegebenenfalls auch eine Rückmeldung an das einparkwillige Fahrzeug erfolgen, dass der zur Verfügung stehende Platz für den Einparkvorgang nicht ausreichend ist. Des Weiteren kann bei für den Einparkvorgang ausreichendem Platz ein sequentielles Rangieren des parkenden Fahrzeuges erfolgen.

Des Weiteren sind Einparkhilfesysteme beispielsweise aus DE 10 2009 008 113 A1, DE 10 2010 037 295 A1 und DE 10 2011 011 144 A1 bekannt.

Aus der US 2012/0 286 974 A1 ist ein gattungsgemäßes Verfahren zur Vermeidung oder Verringerung von Kollisionsschäden an einem geparkten Fahrzeug aufgrund eines einen Parkvorgang ausführenden Fahrzeuges bekannt, bei dem das parkende Fahrzeug bei Erkennung einer drohenden Kollision u.a. ein Verhinderungsmanöver ausführen kann, dessen Ziel die Verhinderung einer Kollision ist.

Zudem ist es aus der DE 10 2009 032 444 A1 insbesondere bekannt, Insassen eines stehenden Fahrzeugs vor einem herannahenden Fahrzeug durch ein Warnsignal zu warnen, das von Abstand und Geschwindigkeit dieses Fahrzeugs abhängt.

Es ist eine Aufgabe der vorliegenden Erfindung, ein Verfahren und eine Vorrichtung zur Vermeidung oder Verringerung von Kollisionsschäden an einem geparkten Fahrzeug bereitzustellen, welche mit vergleichsweise geringem Aufwand eine zuverlässige Schadensvermeidung oder -verringerung ermöglichen.

Diese Aufgabe wird durch das Verfahren gemäß den Merkmalen des unabhängigen Patentanspruchs 1 bzw. die Vorrichtung gemäß den Merkmalen des nebengeordneten Patentanspruchs 7 gelöst.

Ein erfindungsgemäßes Verfahren zur Vermeidung oder Verringerung von Kollisionsschäden an einem geparkten Fahrzeug aufgrund eines einen Parkvorgang ausführenden Fahrzeuges weist folgende Schritte auf:
- Ermitteln, auf Seiten des geparkten Fahrzeuges, ob ein Kollisionsrisiko mit dem den Parkvorgang ausführenden Fahrzeug besteht;
- Aussenden, bei bestehendem Kollisionsrisiko, eines Warnsignals durch das geparkte Fahrzeug;
- Überwachen, ob eine Reaktion des den Parkvorgang ausführenden Fahrzeuges auf das Warnsignal erfolgt; und
- Durchführen, falls keine Reaktion des den Parkvorgang ausführenden Fahrzeuges auf das Warnsignal erfolgt, eines Manövers zur Vermeidung oder Verringerung von Kollisionsschäden durch das geparkte Fahrzeug.

Dabei wird das ausgesandte Warnsignal in Abhängigkeit von einer bestehenden Kollisionswahrscheinlichkeit und/oder in Abhängigkeit vom Ausmaß eines zu erwartenden Kollisionsschadens variiert.

Die erfindungsgemäße Strategie zur Vermeidung oder Verringerung von Kollisionsschäden an einem geparkten Fahrzeug umfasst somit insbesondere zwei Stufen: Wenn ein Kollisionsrisiko mit einem einen Parkvorgang ausführenden Fahrzeug gegeben ist, erfolgt in einer ersten Stufe von Seiten des geparkten Fahrzeuges eine Warnung an den Fahrer des den Parkvorgang ausführenden Fahrzeugs, was beispielsweise durch akustische Signale oder Lichtsignale geschehen kann. Wenn eine Kollision unmittelbar bevorsteht, weil das den Parkvorgang ausführende Fahrzeug bzw. dessen Fahrer nicht auf das Warnsignal reagiert, führt das geparkte Fahrzeug in einer weiteren Stufe ein geeignetes Manöver zur Vermeidung oder Verringerung von Kollisionsschäden aus (wobei es automatisch geringfügig bewegt wird), um Beschädigungen aufgrund des Parkvorganges zu verhindern.

Im Ergebnis können auftretende Schäden an geparkten Fahrzeugen verhindert oder zumindest reduziert werden. Hierbei ist insbesondere eine Ausstattung lediglich des geparkten Fahrzeugs mit der erfindungsgemäßen Vorrichtung (bzw. eine Durchführung der entsprechenden Verfahrensschritte nur Seitens des geparkten Fahrzeuges) erforderlich, so dass insbesondere kein Datenaustausch bzw. keine Kommunikation zwischen dem jeweiligen bereits geparkten Fahrzeug und dem einzuparkenden Fahrzeug notwendig ist. Im Ergebnis werden somit bei vergleichsweise geringem Aufwand - und insbesondere ohne Erfordernis eines aufwändigen Datenaustauschs zwischen unterschiedlichen Fahrzeugen - Kollisionsschäden an einem parkenden Fahrzeug infolge einen Parkvorgang ausführenden Fahrzeug zuverlässig verhindert oder zumindest abgemildert.

Die Erfindung kann unter Verwendung bereits existierender Technologien sowie Sensoren implementiert werden. Insbesondere können bereits existierende Systeme zur Kollisionsvermeidung, Fahrassistenzsysteme sowie Vorrichtungen zur automatischen Parkunterstützung zur Realisierung der Erfindung entsprechend ausgebaut werden.

Gemäß einer Ausführungsform wird das Manöver zur Vermeidung oder Verringerung von Kollisionsschäden derart durchgeführt, dass ein Mindestabstand zwischen dem geparkten Fahrzeug und dem den Parkvorgang ausführenden Fahrzeug nicht unterschritten wird.

Gemäß einer anderen Ausführungsform wird das Manöver zur Vermeidung oder Verringerung von Kollisionsschäden derart durchgeführt, dass ein Kontakt zwischen dem geparkten Fahrzeug und dem den Parkvorgang ausführenden Fahrzeug ermöglicht wird. Dies ist insbesondere dann vorteilhaft, wenn der zur Verfügung stehende Platz für das erfindungsgemäß von dem geparkten Fahrzeug auszuführende Manöver zur Vermeidung oder Verringerung von Kollisionsschäden anderenfalls (d.h. ohne einen solchen, typischerweise vorübergehenden Kontakt) nicht ausreicht.

Gemäß einer Ausführungsform wird hierbei nach Eintreten des Kontaktes zwischen dem geparkten Fahrzeug und dem den Parkvorgang ausführenden Fahrzeug ein von dem geparkten Fahrzeug ausgeübtes Bremsmoment erhöht. Hierdurch kann insbesondere die Aufmerksamkeit des den Parkvorgang ausführenden Fahrers zusätzlich erweckt werden.

Gemäß einer Ausführungsform wird das Aussenden des Warnsignals solange beibehalten, bis das vom geparkten Fahrzeug durchzuführende Manöver zur Vermeidung oder Verringerung von Kollisionsschäden abgeschlossen ist. Hierdurch kann ebenfalls weiterhin der Versuch unternommen werden, die Aufmerksamkeit des den Parkvorgang ausführenden Fahrers zu erregen.

Gemäß einer Ausführungsform erfolgt nach Abschluss des vom geparkten Fahrzeug durchgeführten Manövers zur Vermeidung oder Verringerung von Kollisionsschäden eine Abschätzung des Ausmaßes der erfolgten Schadensvermeidung, so dass dem Halter des geparkten Fahrzeuges eine entsprechende Information (insbesondere auch über gegebenenfalls eingesparte Reparaturkosten) bereitgestellt werden kann.

Die Erfindung betrifft ferner eine Vorrichtung zur Vermeidung oder Verringerung von Kollisionsschäden an einem geparkten Fahrzeug aufgrund eines einen Parkvorgang ausführenden Fahrzeuges, welche dazu ausgestaltet ist, ein Verfahren mit den vorstehend beschriebenen Merkmalen durchzuführen. Zu Vorteilen sowie bevorzugten Ausgestaltungen der Vorrichtung wird auf die vorstehenden Ausführungen im Zusammenhang mit dem erfindungsgemäßen Verfahren Bezug genommen.

Weitere Ausgestaltungen der Erfindung sind der Beschreibung sowie den Unteransprüchen zu entnehmen.

Die Erfindung wird nachstehend anhand von in den beigefügten Abbildungen dargestellten Ausführungsbeispielen näher erläutert.

Es zeigen:
- Figur 1: ein Flussdiagramm zur Erläuterung des Ablaufs eines erfindungsgemäßen Verfahrens in einer Ausführungsform; und
- Figur 2-5: schematische Darstellungen zur Veranschaulichung unterschiedlicher Ausführungsformen des erfindungsgemäßen Verfahrens.

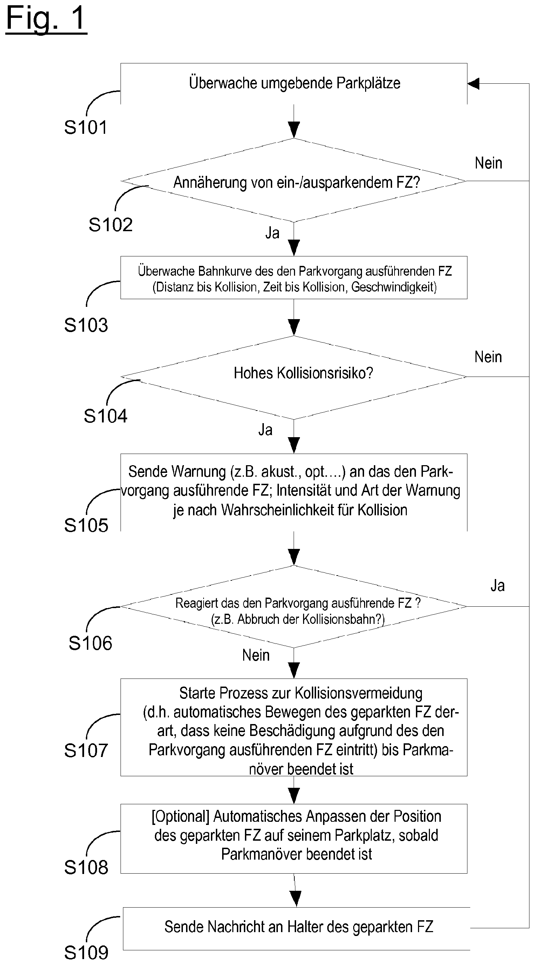

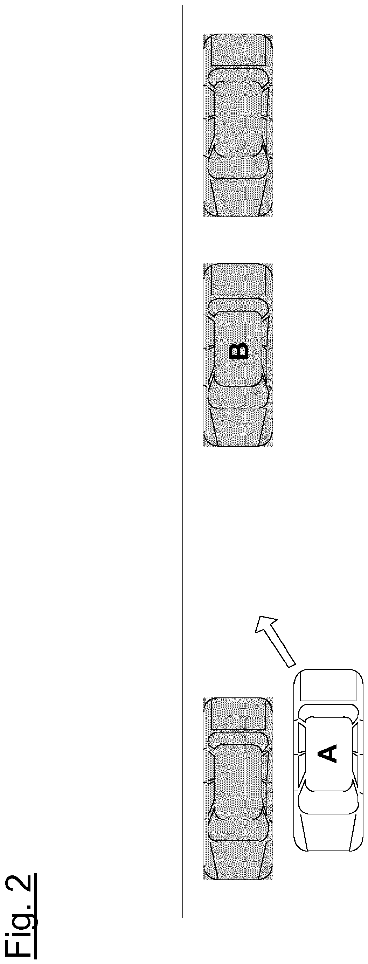

Im Weiteren werden unterschiedliche Ausführungsformen des erfindungsgemäßen Verfahrens unter Bezugnahme auf das in Fig. 1 dargestellte Flussdiagramm sowie die schematischen Darstellungen von Fig. 2 bis 5 näher erläutert.

Gemäß Fig. 1 überwacht in einem Schritt S101 ein geparktes Fahrzeug, welches in Fig. 2-5 mit "B" bezeichnet ist, die umgebenden Parkplätze, sofern die entsprechende Funktion durch den Fahrer aktiviert wurde und sobald der Fahrer das betreffende Fahrzeug B verlassen hat.

Im Schritt S102 ermittelt das geparkte Fahrzeug B unter Verwendung bordseitiger Sensoren, ob ein anderes Fahrzeug, welches in Fig. 2-5 mit "A" bezeichnet ist, ein Parkmanöver hin zu einem angrenzenden (d.h. einem unmittelbar vor oder hinter dem geparkten Fahrzeug B befindlichen) Parkplatz unternimmt.

Falls dies gemäß der Abfrage in Schritt S102 der Fall ist, wird in einem Schritt S103 dieses Parkmanöver des Fahrzeuges A von dem geparkten Fahrzeug B überwacht. Wenn seitens des geparkten Fahrzeuges B ermittelt wird, dass das den Parkvorgang ausführende Fahrzeug A sich auf einer "Kollisionsbahn" befindet (z.B. aufgrund der Fahrzeuggeschwindigkeit, der Distanz bis zu einem Kontakt und/oder der Zeit bis zu einem Kontakt ein erhöhtes Risiko für eine bevorstehende Kollision besteht), sendet das geparkte Fahrzeug B Warnsignale (z.B. visuelle oder akustische Signale) an den Fahrer des den Parkvorgang ausführenden Fahrzeuges A. Hierbei kann beispielsweise die Hupe des geparkten Fahrzeuges B in einem vorgegebenen Rhythmus aktiviert werden, die Lampen des geparkten Fahrzeuges B können mit einer bestimmten Frequenz aktiviert werden, die Scheibenwaschdüsen des geparkten Fahrzeuges B können Wasser auf die Heckscheibe des geparkten Fahrzeuges B spritzen etc..

Die an das den Parkvorgang ausführende Fahrzeug A bzw. dessen Fahrer ausgesandten Warnsignale können in Abhängigkeit von der Wahrscheinlichkeit und/oder dem Ausmaß der möglichen Kollision unterschiedlich ausgestaltet sein. Hierbei kann insbesondere eine Abschätzung möglicher Beschädigungen (Zerstörung von Fahrzeugleuchten, Beulen, Kratzer etc.) erfolgen. Des Weiteren können auch die Abmessungen des den Parkvorgang ausführenden Fahrzeuges A (Gewicht, Form etc.) berücksichtigt werden, was beispielsweise kameragestützt erfolgen kann. Dabei kann ferner das an das den Parkvorgang ausführende Fahrzeug A bzw. dessen Fahrer gesandte Warnsignal umso intensiver sein, je größer die Wahrscheinlichkeit für eine Kollision ist und/oder je kostenintensiver die zu erwartenden Schäden sind.

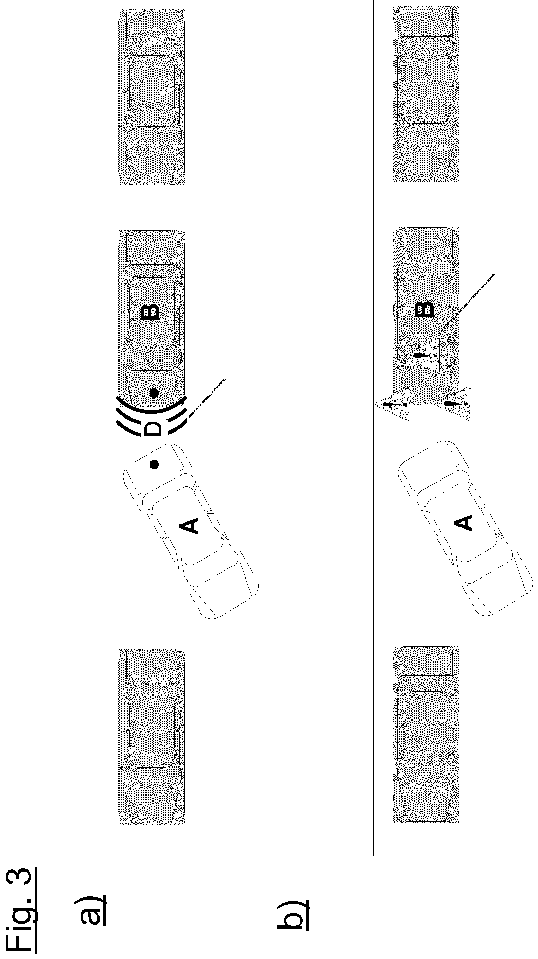

Die vorstehend beschriebenen Schritte sind in Fig. 3a-b veranschaulicht. Hierbei wird gemäß Fig. 3a vom geparkten Fahrzeug B eine hohe Kollisionswahrscheinlichkeit erfasst, wobei z.B. die Geschwindigkeit des den Parkvorgang ausführenden Fahrzeuges A einen vorbestimmten Grenzwert übersteigt und der Abstand D einen vorbestimmten Grenzwert unterschreitet. Gemäß Fig. 3b sendet das geparkte Fahrzeug B spezielle Warnsignale, um den Fahrer des den Parkvorgang ausführenden Fahrzeuges A entsprechend aufmerksam zu machen (Schritt S105 in Fig. 1).

Wenn, unter erneuter Bezugnahme auf Fig. 1, gemäß Abfrage im Schritt S106 das den Parkvorgang ausführende Fahrzeug A auf die Warnsignale des geparkten Fahrzeugs B reagiert (z.B. wenn das den Parkvorgang ausführende Fahrzeug A angehalten wird), geht das Verfahren wieder zu Schritt S101 über.

Wenn hingegen gemäß Abfrage im Schritt S106 das den Parkvorgang ausführende Fahrzeug A nicht auf die Warnsignale des geparkten Fahrzeugs B reagiert, wird im Schritt S107 ein Prozess zur Kollisionsvermeidung gestartet. Dies erfolgt insbesondere, wenn die Kollision bzw. Beschädigung unmittelbar bevorsteht, und wird solange durchgeführt, bis das den Parkvorgang ausführende Fahrzeug A sein Parkmanöver beendet hat. Die in Schritt S105 ausgesandten Warnsignale werden vorzugsweise während des Schrittes S107 solange beibehalten, bis der Prozess zur Kollisionsvermeidung abgeschlossen ist.

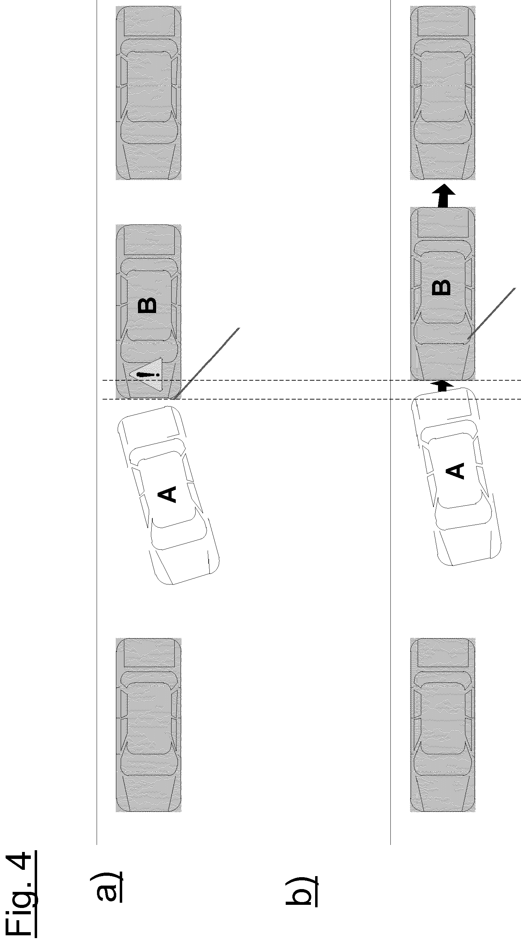

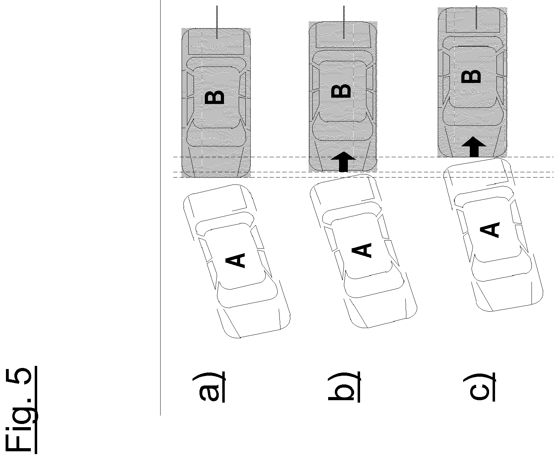

Im Weiteren werden beispielhafte, im Schritt S107 gestartete Strategien zur Kollisionsvermeidung unter Bezugnahme auf Fig. 4a-b und 5a-c beschrieben.

In einer ersten Strategie zur Kollisionsvermeidung erfolgt unter Bezugnahme auf Fig. 4a-b für den Fall, dass um das geparkte Fahrzeug B herum ausreichend Platz verfügbar ist, eine geringfügige Bewegung des geparkten Fahrzeuges B vorwärts oder rückwärts, wenn eine Kollision unmittelbar bevorsteht, wobei ein Mindestabstand zu dem den Parkvorgang ausführenden Fahrzeug A eingehalten bzw. nicht unterschritten wird. Im konkreten Falle erfolgt gemäß Fig. 4b eine Rückwärtsbewegung des geparkten Fahrzeuges B, wobei jeglicher Kontakt mit dem den Parkvorgang ausführenden Fahrzeug A vermieden wird.

Eine weitere Strategie zur Kollisionsvermeidung ist in Fig. 5a-c veranschaulicht. Wenn um das geparkte Fahrzeug B herum kein ausreichender Platz zur Verfügung steht, erfolgt eine nur sehr geringfügige Bewegung des geparkten Fahrzeuges B weg von dem den Parkvorgang ausführenden Fahrzeug A, wobei gemäß Fig. 5b ein sanfter Kontakt zwischen dem den Parkvorgang ausführenden Fahrzeug A und dem geparkten Fahrzeug B zugelassen wird. Dieser sichere und kontrollierte "Kontakt" wird hierbei in solcher Weise optimiert, dass durch das Manöver etwaige Schäden während der Kollision abgefangen werden. Sobald der Kontakt erfolgt ist, vergrößert vorzugsweise das geparkte Fahrzeug B sein Bremsmoment, wodurch eine weitere Rückwärtsbewegung des Fahrzeuges A erschwert wird, um die Aufmerksamkeit des Fahrers des den Parkvorgang ausführenden Fahrzeuges A auf sich zu lenken, wie in Fig. 5c angedeutet ist.

Im Schritt S108 kann, unter erneuter Bezugnahme auf Fig. 1, optional eine automatische Anpassung der Position des geparkten Fahrzeuges B entsprechend der Endposition des den Parkvorgang ausführenden Fahrzeuges A erfolgen.

Wenn das vorstehend beschriebene Manöver zur Vermeidung von Parkkollisionen und Beschädigungen abgeschlossen ist, sendet die Vorrichtung im Schritt S109 in dem beschriebenen Ausführungsbeispiel eine entsprechende Rückmeldung an den Halter des geparkten Fahrzeuges B oder an ein beliebiges geeignetes Informationsnetzwerk. Hierbei können statistische Informationen über die vermiedenen Beschädigungen abgeschätzt und übertragen werden (z.B. darüber, wie hoch die Einsparung aufgrund vermiedener Schäden für den Halter des geparkten Fahrzeuges B war, wie häufig das System aktiviert wurde etc.).

Im Ergebnis werden durch die Erfindung mit vergleichsweise geringem Aufwand und insbesondere ohne Erfordernis eines aufwändigen Datenaustauschs zwischen unterschiedlichen Fahrzeugen Kollisionsschäden an einem parkenden Fahrzeug infolge einen Parkvorgang ausführenden Fahrzeug zuverlässig verhindert oder zumindest abgemildert.

## Patentansprüche

1. Verfahren zur Vermeidung oder Verringerung von Kollisionsschäden an einem geparkten Fahrzeug aufgrund eines einen Parkvorgang ausführenden Fahrzeuges, wobei das Verfahren folgende Schritte aufweist:
a) Ermitteln, auf Seiten des geparkten Fahrzeuges, ob ein Kollisionsrisiko mit dem den Parkvorgang ausführenden Fahrzeug besteht;
b) Aussenden, bei bestehendem Kollisionsrisiko, eines Warnsignals durch das geparkte Fahrzeug;
c) Überwachen, ob eine Reaktion des den Parkvorgang ausführenden Fahrzeuges auf das Warnsignal erfolgt; und
d) Durchführen, falls keine Reaktion des den Parkvorgang ausführenden Fahrzeuges auf das Warnsignal erfolgt, eines Manövers zur Vermeidung oder Verringerung von Kollisionsschäden durch das geparkte Fahrzeug,
**dadurch gekennzeichnet, dass**
das im Schritt b) ausgesandte Warnsignal in Abhängigkeit vom Ausmaß eines zu erwartenden Kollisionsschadens variiert wird.

2. Verfahren nach Anspruch 1,
**dadurch gekennzeichnet, dass**
das an das den Parkvorgang ausführende Fahrzeug bzw. dessen Fahrer gesandte Warnsignal umso intensiver ist , je größer die Wahrscheinlichkeit für eine Kollision ist und/oder je kostenintensiver die zu erwartenden Schäden sind.

3. Verfahren nach einem der Ansprüche 1 oder 2,
**dadurch gekennzeichnet, dass**
im Schritt d) das Manöver zur Vermeidung oder Verringerung von Kollisionsschäden derart durchgeführt wird, dass ein Kontakt zwischen dem geparkten Fahrzeug und dem den Parkvorgang ausführenden Fahrzeug ermöglicht wird.

4. Verfahren nach Anspruch 3,
**dadurch gekennzeichnet, dass**
nach Eintreten des Kontaktes zwischen dem geparkten Fahrzeug und dem den Parkvorgang ausführenden Fahrzeug ein von dem geparkten Fahrzeug ausgeübtes Bremsmoment erhöht wird.

5. Verfahren nach einem der Ansprüche 1 bis 4,
**dadurch gekennzeichnet, dass**
das Aussenden des Warnsignals im Schritt b) solange beibehalten wird, bis das im Schritt d) durchgeführte Manöver zur Vermeidung oder Verringerung von Kollisionsschäden abgeschlossen ist.

6. Verfahren nach einem der vorhergehenden Ansprüche,
**dadurch gekennzeichnet, dass**
nach Abschluss des im Schritt d) durchgeführten Manövers zur Vermeidung oder Verringerung von Kollisionsschäden eine Abschätzung des Ausmaßes der erfolgten Schadensvermeidung erfolgt.

7. Vorrichtung zur Vermeidung oder Verringerung von Kollisionsschäden an einem geparkten Fahrzeug aufgrund eines einen Parkvorgang ausführenden Fahrzeuges,
**dadurch gekennzeichnet, dass**
die Vorrichtung dazu ausgestaltet ist, ein Verfahren nach einem der vorhergehenden Ansprüche durchzuführen.

## Claims

1. Method for avoiding or reducing collision damage to a parked vehicle because of a vehicle performing a parking operation, wherein the method comprises the following steps:
a) determining, on the part of the parked vehicle, whether there is a risk of a collision with the vehicle performing a parking operation;
b) transmitting a warning signal by the parked vehicle if there is a risk of collision;
c) monitoring whether there is a reaction to the warning signal by the vehicle performing a parking operation; and
d) performing a maneuver by the parked vehicle for avoiding or reducing collision damage if there is no reaction to the warning signal by the vehicle performing a parking operation,
**characterized in that**
the warning signal transmitted in step b) is varied depending on the extent of the collision damage to be expected.

2. Method according to Claim 1,
**characterized in that**
the warning signal transmitted to the vehicle performing the parking operation, or to the driver of said vehicle, is more intense the greater the probability of a collision and/or the greater the expense of the collision damage to be expected.

3. Method according to either of Claims 1 and 2,
**characterized in that**
in step d) the maneuver for avoiding or reducing collision damage is performed such that a contact between the parked vehicle and the vehicle performing a parking operation is enabled.

4. Method according to Claim 3,
**characterized in that**
following the occurrence of the contact between the parked vehicle and the vehicle performing a parking operation a braking torque exerted by the parked vehicle is increased.

5. Method according to any one of Claims 1 to 4,
**characterized in that**
transmitting the warning signal in step b) is maintained until the maneuver for avoiding or reducing collision damage performed in step d) is completed.

6. Method according to any one of the preceding claims,
**characterized in that**
after completion of the maneuver performed in step d) for avoiding or reducing collision damage, estimation takes place of the extent of the damage avoidance carried out.

7. Device for preventing or reducing collision damage to a parked vehicle because of a vehicle performing a parking operation,
**characterized in that**
the device is designed to carry out a method according to any one of the preceding claims.

## Revendications

1. Procédé pour éviter ou réduire des dommages de collision à un véhicule stationné du fait d'un véhicule effectuant un processus de stationnement, le procédé comportant les étapes suivantes :
a) détermination, sur les côtés du véhicule stationné, de la présence ou de l'absence d'un risque de collision avec le véhicule effectuant un processus de stationnement ;
b) envoi, en cas de risque de collision existant, d'un signal d'avertissement par le véhicule stationné ;
c) surveillance de la présence ou de l'absence de réaction du véhicule effectuant le processus de stationnement du fait du signal d'avertissement ; et
d) réalisation, en cas d'absence de réaction du véhicule effectuant le processus de stationnement du fait du signal d'avertissement, d'une manoeuvre pour éviter ou réduire des dommages de collision, par le véhicule stationné ;
**caractérisé en ce que** :
le signal d'avertissement émis à l'étape b) varie en fonction de l'ampleur d'un dommage de collision attendu.

2. Procédé selon la revendication 1,
**caractérisé en ce que**
le signal d'avertissement envoyé au véhicule effectuant le processus de stationnement ou à son conducteur est d'autant plus intense que la probabilité d'une collision est grande et/ou que les dommages attendus sont coûteux.

3. Procédé selon l'une quelconque des revendications 1 ou 2, caractérisé ence qu'à l'étape d), la manoeuvre pour éviter ou réduire des dommages de collision est réalisée de telle sorte qu'un contact entre le véhicule stationné et le véhicule effectuant le processus de stationnement est permis.

4. Procédé selon la revendication 3, **caractérisé en ce qu'**après survenue du contact entre le véhicule stationné et le véhicule effectuant le processus de stationnement, un couple de freinage exercé par le véhicule stationné est augmenté.

5. Procédé selon l'une quelconque des revendications 1 à 4, **caractérisé en ce que** l'émission du signal d'avertissement à l'étape b) est maintenue jusqu'à ce que la manoeuvre effectuée à l'étape d) pour éviter ou réduire des dommages de collision soit finie.

6. Procédé selon l'une quelconque des revendications précédentes, **caractérisé en ce qu'**on réalise à la fin de la manoeuvre effectuée à l'étape d) pour éviter ou réduire des dommages de collision une estimation de l'ampleur de l'évitement de dommage effectué.

7. Dispositif pour éviter ou réduire des dommages de collision à un véhicule stationné du fait d'un véhicule effectuant un processus de stationnement, **caractérisé en ce que** le dispositif est conçu pour mettre en oeuvre un procédé selon l'une quelconque des revendications précédentes.
